Europäisches Patentamt

(19) European Patent Office

Office européen des brevets

(11) EP 0 919 770 A1

(12) EUROPEAN PATENT APPLICATION
published in accordance with Art. 158(3) EPC

(43) Date of publication:
02.06.1999 Bulletin 1999/22

(51) Int. Cl.$^6$: F23G 5/50, F23G 7/00

(21) Application number: 98919532.6

(86) International application number:
PCT/JP98/02057

(22) Date of filing: 11.05.1998

(87) International publication number:
WO 98/51968 (19.11.1998 Gazette 1998/46)

(84) Designated Contracting States:
DE DK GB

(30) Priority: 12.05.1997 JP 120725/97

(71) Applicant: NKK CORPORATION
Tokyo 100-0005 (JP)

(72) Inventors:
• TANABE, Minoru
Tokyo 100-0005 (JP)

• AKIYAMA, Hajime
Tokyo 100-0005 (JP)
• KIMURA, Masanobu
Tokyo 100-0005 (JP)

(74) Representative:
Reinhard - Skuhra - Weise & Partner
Postfach 44 01 51
80750 München (DE)

(54) METHOD AND APPARATUS FOR CONTROLLING REFUSE FEEDING QUANTITY OF INDUSTRIAL WASTE INCINERATOR

(57)     A waste feeding amount control method and a waste feeding amount control device for an industrial waste incinerator having a plurality of waste feeding paths are provided. Various types of waste are fed for incineration through feeding ports 2 to 5 provided to an incinerator main body 1. While circulating sand 8 and incineration ash are transported and circulated only the incineration ash is discharged. The amount of steam generation from a waste beating boiler 6 is measured and inputted into a waste feeding mount control device 7. The deviation amount between the target value and observed value of the steam generation amount that is to be controlled in the incinerator is then measured, and the deviation rate and the deviation acceleration are calculated from the deviation amount. Based on the deviation amount, deviation rate, and deviation acceleration, the feeding amounts of the various types of waste of different heating values are controlled by non-linear control. Thus, the object to be controlled can be set at the target value. In doing so, no rapid change in the condition of combustion is caused, and the inner temperature of the incinerator and the steam generation amount can be stabilized.

FIG. 1

## Description

### [FIELD OF THE INVENTION]

The present invention relates to a waste feeding amount control method and device for an industrial waste incinerator, and more specifically, to a waste feeding amount control method and device for an industrial waste incinerator provided with a waste heating boiler and a plurality of waste feeding paths.

### [RELATED ART]

Unlike a municipal waste incinerator, an industrial waste incinerator generally incinerates solid waste a well as sludge waste and liquid waste such as waste oil, waste liquid, and waste water. Those types of waste are normally fed into the incinerator through the respective feeding paths in accordance with predetermined incineration amounts. In such an industrial waste incinerator, a target value is maintained by increasing and decreasing the incineration amounts of the waste so as to stabilize the inner temperature of the incinerator by automatic combustion control and the amount of steam generated from the waste heating boiler provided to the incinerator.

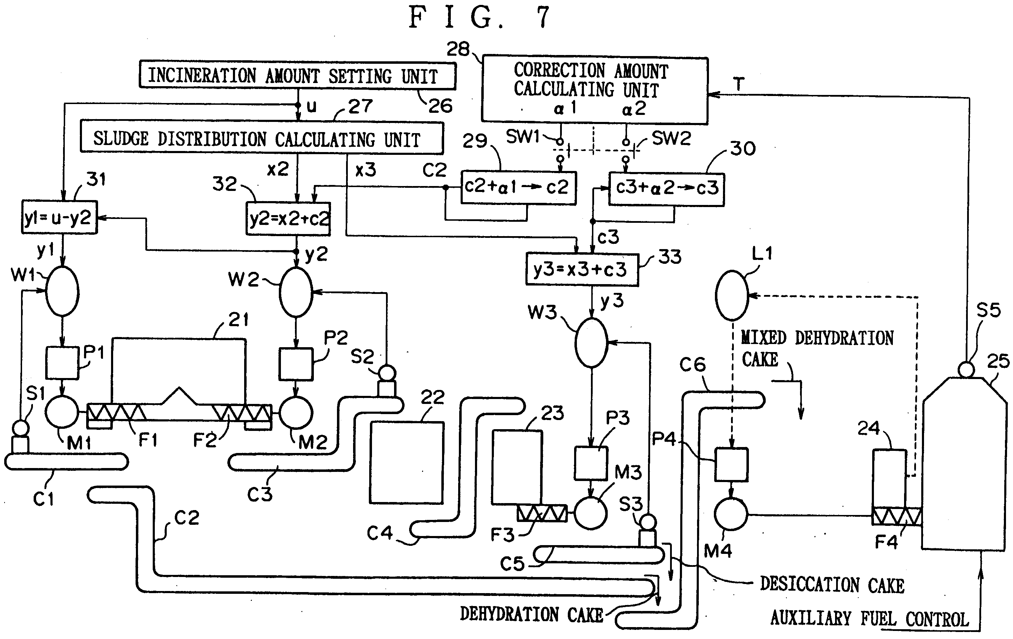

In the prior art, for instance, Japanese Patent Laid-Open Application No. 6-300238 discloses a mixed sludge incinerator which maintains self-burning ability only with sludge from sewage sludge incinerators. Such a conventional mixed sludge incinerator is shown in Fig. 7. In this figure, the mixed sludge incinerator 25 is of a fluid type, and the mixture of a dehydration cake and a desiccation cake which is a dried dehydration cake is fed into the incinerator. A dehydration cake having a predetermined moisture content is fed into a feeding hopper 24 from a screw conveyer F1 of a quantitative feeder 21 via conveyers C1, C2, and C6. A part of the dehydration cake is fed into a dryer 22 from a screw conveyer F2 via a conveyer C3, and turned into a desiccation cake. The desiccation cake is fed into a desiccation cake hopper via a conveyer C4, and a predetermined amount of desiccation cake is fed into the feeding hopper 24 from a screw conveyer F3 via conveyers C5 and C6. The mixture cake fed into the feeding hopper 24 is then fed into the sludge incinerator 25 from a screw conveyer F4. The amounts of the cakes are measured by weight sensors S1 to S3, respectively, and the measured values are inputted into weight adjusters W1 to W3. Based on the operation signals transmitted from the weight adjusters W1 to W3, motors M1 to M4 are driven under the control of control units P1 to P4, thereby controlling the incineration amounts of the dehydration and desiccation cakes.

In an incineration amount setting unit 26, an incineration amount u per hour is set. In a sludge distribution calculating unit 27, ratio calculation values x2 and x3 for the dehydration and desiccation cakes are set. The weight adjusters W1 to W3 are controlled by outputs from calculators 31 to 33, respectively. In the calculators 32 and 33, the ratio calculation values x2 and x3 are adjusted based on compensation amounts c2 and c3 transmitted from a correction amount calculating unit 28 so as to set an initial mixed ratio of the desiccation cake to the dehydration cake. The initial mixed ratio is adjusted by detecting the inner temperature T of the incinerator by a temperature sensor S5 disposed in the fluidized-bed sludge incinerator 25. The inner temperature T of the incinerator is inputted into the correction amount calculating unit 28 so as to determine the correction amount $\alpha$ 1 or $\alpha$ 2 based on the inner temperature T. In calculating units 29 and 30, register values (compensation amounts) c2 and c3 are set in accordance with the correction amounts $\alpha$ 1 or $\alpha$ 2, and target values y1 to y3 are set. In such a procedure, the, mixing ratio of the dehydration cake to the desiccation cake is determined, and the inner temperature of the fluidized-bed sludge incinerator 25 is stabilized.

### [PROBLEMS TO BE SOLVED BY THE INVENTION]

In a conventional industrial waste incinerator, the feeding amounts of various types of waste need to be suitably controlled to stabilize the inner temperature of the incinerator and the amount of steam generated from the waste heating boiler. An industrial waste incinerator incinerates less solid waste than liquid waste of high heating value, such as waste oil, and liquid waste of low heating value, such as waste liquid and waste water. This has a great influence on the inner temperature of the incinerator and the steam generation amount. If waste of high heating value makes up a large part of industrial waste, the inner temperature and the steam generation amount respond to the feeding amount control more quickly than in a case where solid waste or muddy waste is the main content of the industrial waste. This makes it difficult to stabilize the inner temperature and the steam generation amount.

More particularly, in a fluidized-bed incinerator of high burning rate, burning liquid waste such as waste oil can obtain a quick response required to stabilize the inner temperature and the amount of steam generated from the waste heating boiler, but it is problematic at the same time, because it is liable to cause a rapid change to the condition of combustion. If the inner temperature drastically rises due to feeding the liquid waste, it is necessary to improve a water injection controller so as to promptly lower the inner temperature. In terms of combustion efficiency, however, it is not preferable to employ a water injection controller to restrict a temperature rise.

In the sewage sludge incinerator of a fluidized bed type shown in Fig. 7, the incineration amount u is set, and a feeding amount y2 of the dehydration cake to be fed into the dryer 22 and a feeding amount y3 of the desiccation cake to be fed into the feeding hopper 24 are set in accordance with the inner temperature T of the incinerator. In the feeding hopper 24, a feeding amount y1 of the dehydration cake containing water is set. By doing so, the feeding ratio of the dehydration cake to the desiccation cake is feedback controlled in accordance with the inner temperature. However, such combustion control is only suitable for controlling the feeding ratio of two different matters of different heating values, and unsuitable for controlling the feeding ratio among more than two different matters. If more than two matters of different heating values are contained in the industrial waste, it is difficult to obtain a quick response from the inner temperature, which might lead to a wide fluctuation of the inner temperature.

The present invention is aimed at solving the above problems, and therefore the objective of it is to provide a waste feeding amount control method and device for an industrial waste incinerator in which the inner temperature of the incinerator and the steam generation amount can be stabilized by controlling the feeding amount of various types of waste according to the respective beating values, without causing a rapid change to the condition of combustion.

## [DISCLOSURE OF THE INVENTION]

To achieve the above objective, the present invention disclosed in claim 1 provides a waste feeding amount control method for an industrial waste incinerator having a plurality of waste feeding paths. This method comprises the steps of: determining the deviation amount between a target value and an observed value of an object to be controlled in the industrial waste incinerator; calculating a deviation rate and deviation acceleration from the deviation amount; and controlling each feeding amount of various types of waste having various beating values by non-linear control, based on the deviation amount, the deviation rate, and the deviation acceleration, thereby setting the object to be controlled at the target value.

According to this invention, a quick response to a fluctuation in the deviation amount is made possible by making the fluctuation in the deviation amount more obvious by calculating the deviation rate and the deviation acceleration from the deviation amount determined from an observed value. Thus, non-linear control is performed on the various types of waste of the various heating values, and a quick response to a fluctuation of the object to be controlled is made possible.

The present invention disclosed in claim 2 discloses the waste feeding amount control method according to claim 1, in which the step of controlling the feeding amounts by non-linear control includes the steps of: setting increments of the feeding amounts of the various types of waste with respect to the deviation amount, the deviation rate, and the deviation acceleration, according to a plurality of fuzzy rules; comparing matching grades of conditions specified in the plurality of fuzzy rules; selecting the optimum fuzzy rule from the plurality of fuzzy rules; and setting the feeding amounts of the various types of waste.

According to this invention, the matching grades of the various types of waste are determined from membership functions. The matching grades are then compared so as to select the optimum fuzzy rule from the plurality of fuzzy rules.

The present invention disclosed in claim 3 provides the waste feeding amount control method according to claim 1, in which the step of controlling the feeding amounts by non-linear control includes the steps of: specifying increments of the feeding amounts of the various types of waste by a plurality of fuzzy rules; and composing the matching grades of the conditions specified in the plurality of fuzzy rules by fuzzy reasoning, thereby setting the waste feeding amounts.

According to this invention, the matching grades of the various types of waste with respect to the measured values are composed, so that the fuzzy functions can be integrally controlled.

The present invention disclosed in claim 4 provides a waste feeding amount control device for an industrial waste incinerator. This device comprises: a calculating unit which calculates a deviation rate and deviation acceleration from a deviation amount between a target value and an observed value of an object to be controlled in the industrial waste incinerator; a fuzzy reasoning unit which performs non-linear control on various types of waste of various beating values, based on the deviation amount, the deviation rate, and the deviation acceleration; and a manipulated variable outputting unit which controls the object so as to approach to the target value based on the manipulated variable of each type of waste transmitted from the fuzzy reasoning unit.

According to this invention, the deviation rate and the deviation acceleration are calculated from the deviation amount of the object to be controlled, so as to make a fluctuation in the deviation amount more obvious. Thus, a quick response to a temperature fluctuation can be made possible.

**[BRIEF DESCRIPTION OF THE DRAWINGS]**

Fig. 1 shows an embodiment of the waste feeding amount control device for an industrial waste incinerator in accordance with the present invention;

Figs. 2A to 2E show the deviation amount, the deviation rate, the deviation acceleration, and the feeding mounts in a case where the steam generation amount becomes smaller than the target value;

Figs. 3A to 3F show the deviation amount, the deviation rate, the deviation acceleration, and the feeding mounts in a case where the steam generation amount becomes larger than the target value;

Figs. 4A to 4C show membership functions;

Figs. 5A to 5C show membership functions;

Fig. 6 shows another embodiment of the waste feeding amount control device for an industrial waste incinerator in accordance with the present invention; and

Fig. 7 shows an example of the conventional waste feeding amount control device for an industrial waste incinerator.

**[DESCRIPTION OF THE PREFERRED EMBODIMENTS]**

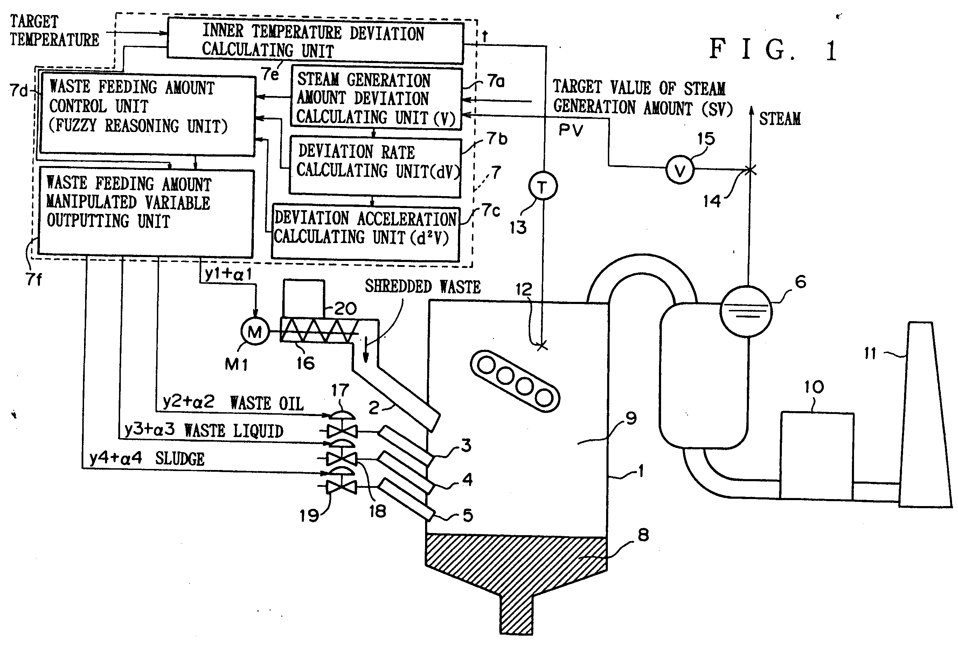

The following is a description of the waste feeding amount control device and method for an industrial waste incinerator of the present invention, with reference to the accompanying drawings. Fig. 1 is a schematic view of the fluidized-bed industrial waste incinerator. In this figure, the incinerator main body 1 is provided with high-temperature circulating sand 8, an upper combustion chamber (hereinafter referred to as a freeboard) 9, a feeding port 2 through which solid waste (shredded waste) is fed into the incinerator main body 1, a feeding port 3 through which liquid waste (waste oil) of high heating value is fed into the incinerator, a feeding port 4 through which liquid waste (waste liquid) of low beating value is fed into the incinerator, a feeding port 5 through which mud waste (sludge) is fed into the incinerator, and a temperature sensor 12 on the upper portion inside the incinerator main body 1. Sand fluidization air is supplied from the bottom of the incinerator, and secondary combustion air is supplied into the freeboard 9. Incineration ash is discharged by a sand discharger together with the circulating sand 8. The circulation sand 8 is then brought back into the freeboard 9 by a sand circulation conveyer (not shown). Combustion gas is sent to an exhaust gas disposal unit 10 via a waste heat boiler 6, where toxic substances are eliminated from the combustion gas. The combustion gas is then discharged through a funnel 11.

The waste (shredded waste, waste oil, waste liquid, sludge) is fed into the incinerator through the respective feeding ports in accordance with the respective feeding amounts of waste set by a waste feeding amount control device 7. The shredded waste is fed into a quantitative feeder 16 provided with a screw conveyer and others driven by a motor M1, and the waste oil, waste liquid, and sludge are fed into the freeboard 9 through the control valves 17 to 19, respectively. The fed waste is heat-decomposed on contact with the circulating sand 8 and the high-temperature combustion gas inside the freeboard 9, and burnt through complete combustion in the freeboard 9. The combustion gas is heat-recovered, with assistance of the steam generating boiler 6, and then discharged through the tunnel 11 via the exhaust gas disposal unit 10.

Inside the incinerator main body 1, a temperature sensor 12 is provided for detecting the inner temperature of the incinerator, and the output of the temperature sensor 12 is inputted into a temperature detector 13. A steam flow rate sensor 14 is provided to the steam discharging pipe, and the detected signals from the sensor 14 are inputted into the waste feeding amount control device 7. An incinerator inner temperature target value, a steam generating amount target value, and disposal amounts y1 to y4 of various types of waste are inputted into the waste feeding amount control device 7, and a non-linear control unit calculates increments $\alpha$1 to $\alpha$4 of the feeding amounts of the various types of waste. Based on the manipulated values according to the disposal amounts y1 to y4 and the increments $\alpha$1 to $\alpha$4, the quantitative feeder 16 and the control valves 17 to 19 are operated, so that the inner temperature of the incinerator and the amount of steam generation can be stabilized at target values.

In the waste feeding amount control method of this embodiment, the object to be controlled is the amount of steam generation. The output of the steam flow rate sensor 14, which detects the steam flow rate of the boiler 6, is inputted into a steam generation amount detector 15 to detect the amount of steam generation. Data on the amount of steam generation are periodically sent to the waste feeding amount control device 7, in which the data are subjected to an operation by a steam generation amount deviation calculating unit 7a so as to determine the steam generation amount target value (SV) and the deviation (steam generation amount deviation) V. The steam generation amount deviation V is inputted into a deviation rate calculating unit 7b so as to calculate the difference (deviation rate) dV between the previously calculated steam generation amount deviation V1 and the currently calculated steam generation amount deviation V2. Further, the deviation rate dV is inputted into the deviation acceleration calculating unit 7c so as to calculate the difference (deviation acceleration) $d^2V$ between the previously calculated deviation rate dV1 and the currently calculated deviation rate dV2. The steam generation amount deviation V, the deviation rate dV, and the deviation acceleration $d^2V$ are inputted into the waste feeding amount control unit 7d. The waste feeding amount control unit 7d is a non-linear control unit, and preferably a fuzzy reasoning unit. The output from the waste feeding amount control unit 7d is sent to each feeding amount manipulated value output unit 7f. Based on the output from the respective feeding amount manipulated value output units 7f, the quantitative feeder 16 and the control valves 17 to 19 are operated, and the condition of combustion is controlled so that the steam flow rate can be stabilized.

As described above, the waste feeding amount control unit 7d is a non-linear control unit, and preferably a fuzzy reasoning unit. This control unit 7d operates in accordance with fuzzy rules shown below in Table 1. Each of the fuzzy rules consists of a condition (first half) and an effect (second half).

(Table 1)

Fuzzy Rules to Set Waste Feeding Amounts

(1) If V and dV are both negative, the increment of the feeding amount of shredded waste should be positive.

(2) If V and dV are both negative, the increment of the feeding amount of waste oil should be positive.

(3) If V is negative while $d^2V$ is positive, the increment of the feeding amount of shredded waste should be positive, and the increment of the feeding amount of waste oil should be negative. In this case, the feeding amount of the waste should not be smaller than the normal amount.

(4) If V and dV are both positive, the increment of the feeding amount of sludge should be positive.

(5) If V and dV are both positive, the increment of the feeding amount of waste liquid should be positive.

(6) If V is positive while V is negative, the increment of the feeding amount of the sludge should be positive, and the increment of the feeding amount of the waste liquid should be negative. In this case, the feeding amount of the waste should not be smaller than the normal amount.

In Table 1, the fuzzy rules (1) to (3) are applied to cases where the steam generation amount becomes lower than the target value, while the fuzzy rules (4) to (6) are applied to cases where the steam generation amount becomes larger than the target value.

The basics of the fuzzy rules are as follows. If the steam generation amount is smaller than the target value, waste of high heating value should be fed. If the steam generation amount is larger than the target value, waste of low heating value should be fed. By doing so, the control values (such as the inner temperature of the incinerator and the steam generation amount) can be stabilized. Furthermore, if the value of the steam generation amount deviation acceleration changes from positive to negative, or from negative to positive, it should be judged that the steam generation amount is approaching to the target value. At this point, the feeding amount is returned to the normal amount, so that overshoot can be prevented after the steam generation amount has reached the target amount. To put the steam generation amount back at the target value when the deviation is negative or positive, a combustion matter of high heating value, such as waste oil and sludge, should be employed. By doing so, the steam generation amount can be rapidly returned to the target value.

More specifically, the condition specified in the fuzzy rule (1), "if V and dV are both negative", corresponds to a case where the steam generation amount starts reducing from the target value. In such a case, the feeding amounts of shredded waste and waste oil are both increased so as to stimulate combustion. Thus, the steam generation amount is increased. The condition specified in the fuzzy rule (2), "if V and dV are both negative", corresponds to a case where the steam generation amount has become far lower than the target value. In such a case, the feeding amounts of shredded waste and waste oil are both increased so as to stimulate combustion. Thus, the steam generation amount is increased. The condition specified in the fuzzy rule (3), "if V is negative and $d^2V$ is positive", corresponds to a case where the steam generation amount starts returning to the target value as a result of application of the fuzzy rules (1) and (2). In such a case, the feeding amount of waste oil is reduced, and the compensation afterward is performed only with shredded waste.

Meanwhile, the condition specified in the fuzzy rule (4), "if V and dV are both positive", corresponds to a case where the steam generation amount starts surpassing the target value. In such a case, the feeding amounts of the sludge and waste liquid are both increased to lower the inner temperature of the incinerator. Thus, the steam generation amount is controlled to decrease. The condition specified in the fuzzy rule (5), "if V and dV are both positive", the feeding amounts of sludge and waste liquid are both increased to cool the inside of the incinerator, thereby reducing the steam generation amount. The condition specified in the fuzzy rule (6), "if V is positive and $d^2V$ is negative", corre-

sponds to a case where the steam generation amount starts returning toward the target value after application of the fuzzy rules (4) and (5). In such a case, the feeding amount of waste liquid is reduced to the planned disposal amount, and the compensation is performed only with waste liquid afterward. By controlling in this manner, the condition of combustion inside the incinerator can be stabilized, and overshoot of steam generation can be prevented.

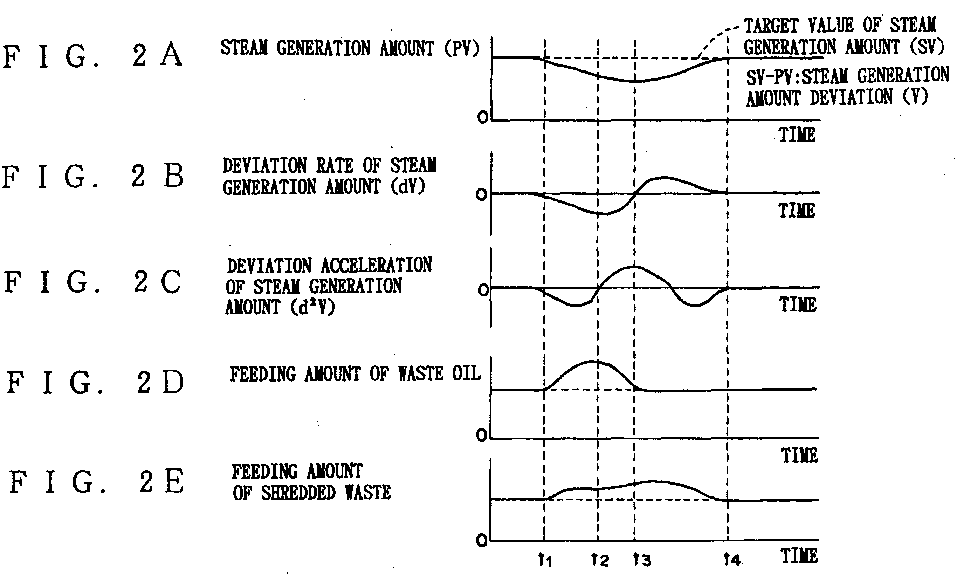

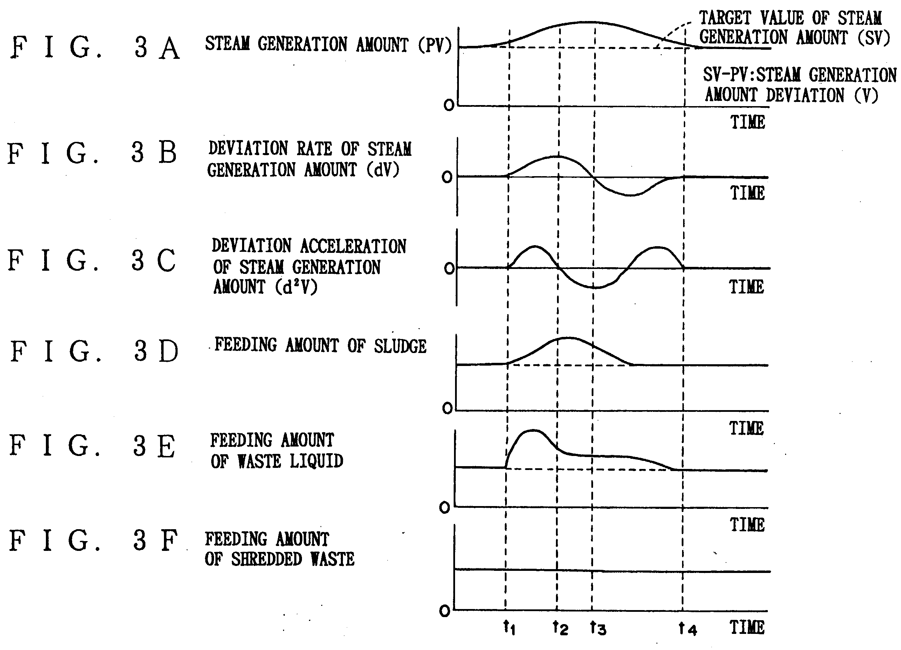

Figs. 2A to 2E and 3A to 3F are waveform charts showing steam deviation, steam deviation rate, steam deviation acceleration, and feeding amounts of waste oil, shredded waste, and so forth. Figs. 2A to 2C show the steam generation amount deviation V, the steam generation amount deviation rate dV, and the steam generation amount deviation acceleration $d^2V$ in a case where the steam generation amount becomes negative. Figs. 2D and 2E show the feeding amounts of waste liquid and shredded waste in a case where the calculation results from the waste feeding amount control unit (fuzzy reasoning unit ) 7d are outputted from the respective waste feeding amount manipulated value output unit 7f, so that the quantitative feeder 16 and the control valves 17 to 19 are operated. Thus, each feeding amount is controlled to stabilize the steam generation amount. Figs. 3A to 3F show a case where the steam generation amount becomes larger than the target value. Those figures are waveform charts showing the steam generation amount deviation V, the steam generation amount deviation rate dV, and the steam generation amount deviation acceleration $d^2V$, and the feeding amounts of sludge and waste liquid. As shown in the waveform charts, if the steam generation amount becomes larger than the target value, sludge and waste liquid of low heating value can be burnt without causing a wide fluctuation to the steam generation amount.

Referring to Figs. 2A to 2E, the following is a further description of the fuzzy rules (1) to (6) specified in Table 1. At time t1 in Figs. 2A to 2E, a decrease in the steam generation amount is detected, and the steam amount deviation V and the deviation rate dV are both negative. Here, the fuzzy rule (1) is first applied so as to increase the feeding amounts of waste oil and shredded waste. When such a tendency becomes more obvious, the fuzzy rule (2) is applied so as to increase the feeding amounts of waste oil and shredded waste. At time t2, the deviation acceleration $d^2V$ converts from negative to positive. Here, the fuzzy rule (3) is applied so as to increase the feeding amount of shredded waste and to decrease the feeding amount of waste oil. At time t3, the feeding amount of waste oil is returned to the normal feeding amount, and controlled not to reduce from that point. Beyond time t3, the decrease of the steam generation amount is compensated with an increase in the feeding amount of shredded waste. At time t4, the steam generation amount reaches the target value, and the feeding amount of shredded waste returns to the normal feeding amount.

Referring to the conditions specified in the fuzzy rules in Table 1, the conditions specified in the fuzzy rules are represented as membership functions shown in Figs. 4A to 4C. Those figures show the membership functions based on the calculated values of the steam generation amount deviation V, the steam generation amount deviation rate dV, and the steam generation amount deviation acceleration $d^2V$. In the membership functions, the calculated values are positive or negative, ad do not vary. The axis of abscissas in the figures represents calculated values, while the axis of ordinates represents matching grades.

Fig. 4A shows membership functions in cases where (a) no deviation occurs, (b) negative deviation occurs, and (c) position deviation occurs. In this figure, the matching grade of the negative deviation at calculated value T1 (observed value) of the steam generation amount deviation V is 0.5. In this case, the fuzzy rule (1) is applied so as to increase the amount of shredded waste. Thus, the steam generation amount can be stabilized.

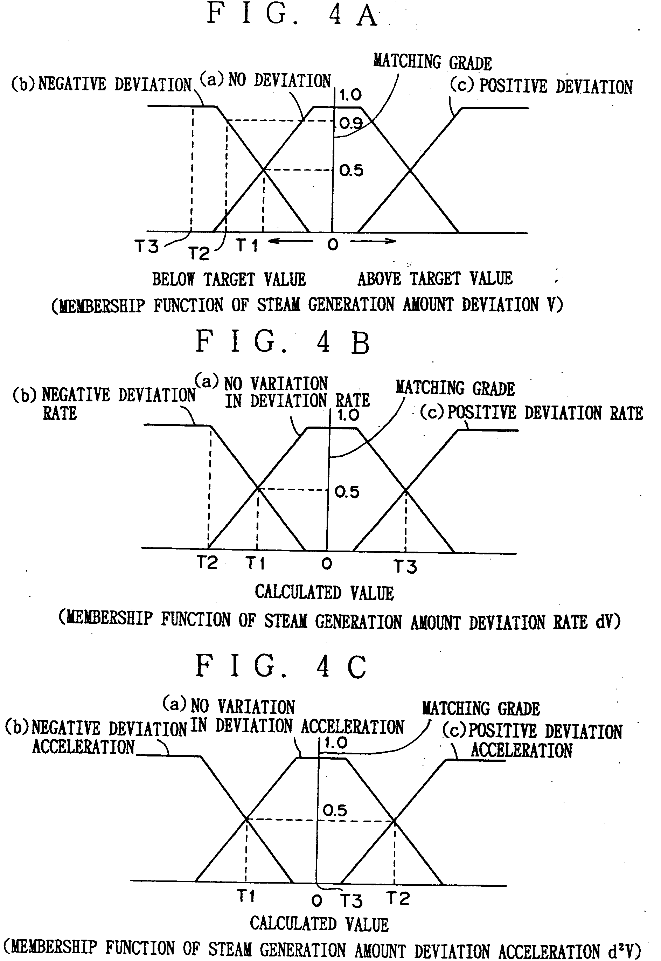

At calculated value T2, the matching grade of the negative deviation of the steam generation amount is 0.9 in Fig. 4A, and the matching grade of the negative steam generation amount deviation rate is 1.0 in Fig. 4B. With the fuzzy rules (1) and (2) combined, the amounts of shredded waste and waste oil can be increased so as to stabilize the steam generation amount. At calculated value T3, the matching grade of the negative deviation of the steam generation amount is 1.0 in Fig. 4A and the matching grade of the negative deviation rate of the steam generation amount is 1.0 in Fig. 4B. In Fig. 4C, the matching grade of the position deviation acceleration is 0.5, which indicates that the steam generation amount is approaching to the target value. In this case, the fuzzy rule (3) is applied so as to make the increment of the feeding amount of shredded waste positive and the increment of the feeding amount of waste oil negative. Here, the feeding amounts should not be made smaller than the normal feeding amount.

The membership functions in Figs. 4A to 4C include membership functions in cases where (a) no deviation occurs, (a) the deviation is invariable, and (a) the deviation acceleration rate is invariable. The control conditions can be frequently switched so as to prevent a chattering state. If all the conditions are satisfied, optimum control is performed according to comparison results.

The membership functions in Figs. 4A to 4C are written in the waste feeding amount control unit (fuzzy reasoning unit) 7d, and the matching grades are determined based on the steam generation amount deviation V, the steam generation amount deviation rate dV, and the steam generation amount deviation acceleration $d^2V$, which are calculated by the steam generation amount deviation calculating unit 7a, the deviation rate calculating unit 7b, and the deviation acceleration calculating unit 7c, respectively, and inputted into the waste feeding amount control unit (fuzzy reasoning unit) 7d. In accordance with the matching grades, the optimum fuzzy rule is selected so that the steam generation amount approaches to the target value.

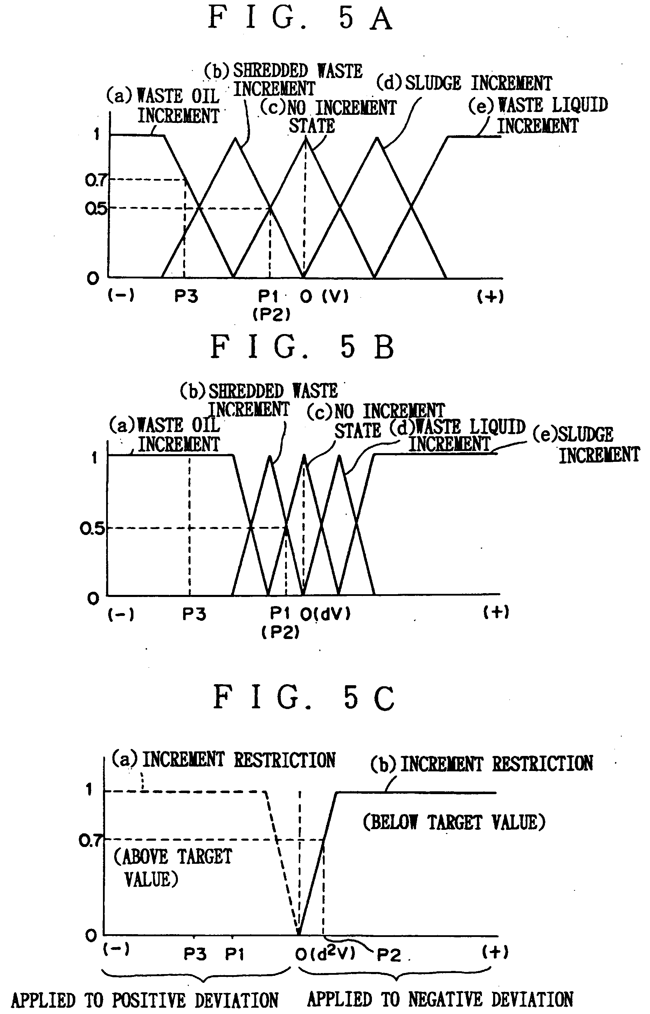

Referring now to Figs. 5A to 5C, the following is a description of another embodiment of the waste feeding amount control method for an industrial waste incinerator according to the present invention. Here, the waste feeding amount control device is substantially the same as the device shown in Fig. 1. However, the membership functions written in the waste feeding amount control unit (fuzzy reasoning unit) 7d are different from those of the foregoing embodiment. The membership functions vary depending on the shape of the industrial waste incinerator, the feeding amount, and the matter to be incinerated. Therefore, it should be understood that the membership functions are not limited to those shown in Figs. 4A to 4C and 5A to 5C.

Figs. 5A to 5C show membership functions representative of the increment, maintenance, and increment restriction of each waste with respect to the steam generation amount deviation V, the deviation rate dV, and the deviation acceleration $d^2V$. First, the membership functions shown in Fig. 5A will be described below. The membership functions in the figure are (a) the membership function of the increment of waste oil, (b) the membership function of the increment of shredded waste, (c) the membership function in a case where the current feeding condition is maintained, (d) the membership function of the increment of waste oil, and (e) the membership function of the increment of shredded waste. If the observed value is positive, the steam generation amount deviation is positive. If the observed value is negative, the steam generation amount deviation is negative.

Fig. 5B shows membership functions with respect to the steam generation amount deviation rate dV. This figure includes (a) the membership function of the increment of waste oil, (b) the membership function of the increment of shredded waste, (c) the membership function in a case where the current state is maintained, (d) the membership function of the increment of waste liquid, and (e) the membership function of the increment of sludge. Fig. 5C shows the membership functions representative of increment restriction on the feeding amount with respect to the steam generation amount deviation acceleration $d^2V$. This figure includes (a) the membership function representative of the increment restriction in a case where the steam generation amount deviation becomes larger than the target value, and (b) the membership function representative of the increment restriction in a case where the steam generation amount deviation becomes smaller than the target value.

The fuzzy control will now be described with reference to Figs. 5A to 5C. Observed values P1 to P3 are the values calculated based on the steam generation amount that is periodically measured. In Fig. 5A, at the observed value P1 with respect to the steam generation amount deviation V, the matching grade of the "increment of shredded waste" (b) is 0.5, while the matching grades of the other increments are 0. Although the matching grade with respect to the membership function (c) is 0.5, the matching grade of the "increment of shredded waste" (b) is employed herein. In Fig. 5B, at the observed value P1 with respect to the steam generation amount deviation rate dV, the matching grade of the "increment of shredded waste" (b) is 0.5, while the matching grades with respect to other increments are 0. In Fig. 5C, at the observed value P1 with respect to the steam generation amount deviation acceleration $d^2V$, the matching grade of the "increment restriction" (b) is 0. Since the steam generation amount deviation V and the steam generation amount deviation rate dV are both negative here, the fuzzy rule (1) in Table 1 is applied so as to increase the shredded waste.

At the observed value P2, the matching grade g1 of the "increment of shredded waste" (b) with respect to the steam generation amount deviation V is 0.5, and the matching grade g2 of the "increment of shredded waste" (b) with respect to the steam generation amount deviation rate dV is 0.5. On the other band, the matching grade g3 of the "increment restriction" (b) at observed value P2 is 0.7. Accordingly, the relationship among the matching grades g1 to g3 can be expressed as g1 < g3 and g2 < g3. In this case, the fuzzy rule (3) is applied so as to restrict the increment of waste oil based on the judgment that the steam generation amount is approaching to the target value. Thus, the amount of shredded waste is maintained at an amount larger than the normal feeding amount.

At the observed value P3 in Fig. 5A, the matching grade of the "increment of waste oil" (a) with respect to the steam generation amount deviation V is 0.7, and the matching grades according to the other membership functions are 0. At the observed value P3 In Fig. 5B, the matching grade of the "increment of waste oil" (a) with respect to the steam generation amount deviation rate dV is 1, and the matching grades according to the other membership functions are 0. At the observed value P3 in Fig. 5C, the matching grade of the "increment restriction" is 0. In this case, the increment of shredded waste should be maintained, while the amount of waste oil should be increased. If the matching grade according to the membership function (c) of maintaining the waste feeding amount in a normal state is 0.5 or larger, the predetermined waste feeding amount should be maintained.

Meanwhile, to set each feeding amount increment, the matching grades g1 to g3 determined from the respective observed values in the membership functions in Figs. 5A to 5C are compared. According to the comparison result, the fuzzy rule of the largest matching grade is selected from the fuzzy rules (1) to (3). Thus, the steam generation amount can be controlled to approach to the target value. If all the conditions specified in the fuzzy rules (1) to (3) are satisfied while the steam generation amount is recovering from the reduction, either the combination of the fuzzy rules (1) and (2) or the fuzzy rule (3) can be selected.

In the case where either the combination of the fuzzy rules (1) and (2) or the fuzzy rule (3) is selected, the matching grade g1 of the fuzzy rule (1), the matching grade g2 of the fuzzy rule (2), and the matching grade of the fuzzy rule (3) are obtained, and the obtained matching grades g1 to g3 are compared to select the fuzzy rule of the largest matching grade. Thus, a suitable manipulated variable can be set.

Each of the manipulated variables r1 to r3 of the fuzzy rules (1) to (3) is the weighted mean value r of the matching grades g1, g2, and g3, that is, a manipulated variable can be expressed as: $r = (g1r1 + g2r2 + g3r3) / (g1 + g2 + g3)$. Referring to Fig. 1, the initial feeding amounts y1 to y4 are weighted with the weighted manipulated variables r1 to r4, and the manipulated variables $\alpha 1$ to $\alpha 4$ are set by non-linear control.

In the case where the manipulated variables are set by selecting either the combination of the fuzzy rules (1) and (2) or the fuzzy rule (3) so as to conduct defuzzification, the matching grade g1 of the fuzzy rule (1), the matching grade g2 of the fuzzy rule (2), and the matching grade g3 of the fuzzy rule (3) are obtained, and the obtained matching grades g1 to g3 are compared with each other. If the matching grade g3 is the largest, the fuzzy rule (3) is selected, and if either the matching grade g1 or g2 is the largest, the combination of the fuzzy rules (1) and (2) is selected. Thus, the manipulated variable is determined.

The output results of applying the fuzzy rules (1) and (2) are composed by fuzzy reasoning in the following manner.

In a first stage, the matching grades g1 to g3 of the fuzzy rules (1) to (3) are determined. In a second stage, the manipulated variables r1 and r2 of the fuzzy rules (1) and (2) are corrected according to the matching grades g1 and g2. If the manipulated variable r1 to be used in correcting the steam generation amount deviation only with shredded waste and the manipulated variable r2 to be used in correcting the steam generation amount deviation only with waste oil, the value of the manipulated variables combined becomes excessive. To avoid such a situation, the manipulated variables are corrected by scaling as follows: $\alpha 1 = g1r1/(g1r1 + g2r2)$, $\alpha 2 = g2r2/(g1r1 + g2r2)$. Thus, suitable manipulated variables can be obtained. Referring to Fig. 1, the manipulated variables $\alpha 1$ and $\alpha 2$ are set by non-linear control for the initial feeding amounts y1 and y2.

It is also possible to employ all the three fuzzy rules (1), (2), and (3) at once. In such a case, the manipulated variable r3 for shredded waste and the manipulated variable r4 for waste oil can be obtained from the fuzzy rule (3) at the same time. The manipulated variables r1 and r3 according to the fuzzy rule (1) are composed, and the manipulated variables r2 and r4 according to the fuzzy ruled (2) are composed. The composed results are then corrected with the matching grades g1 and g2. More specifically, the manipulated variables r1 and r3 are composed by scaling as follows: $r1' = (g1r1 + g3r3) / (g1 + g3)$. The manipulated variables r2 and r4 are composed as follows: $r2' = (g2r2 + g3r4) / (g2 + g3)$. With the composed manipulated variables, manipulated variables $\alpha 1$ and $\alpha 2$ according to all the three fuzzy rules (1) to (3) can be obtained as follows: $\alpha 1 = g1r1'/(g1r2' + g2r2')$; $\alpha 2 = g2r2'/(g1r1' + g2r2')$.

The above description concerns a case where the steam generation amount deviation is negative. In a case where the steam generation amount deviation is positive, the same procedure as in the above description is followed according to the fuzzy rules (4) to (6). Here, manipulated variables $\alpha 3$ and $\alpha 4$ are set for the initial feeding amounts y3 and y4 by non-linear control.

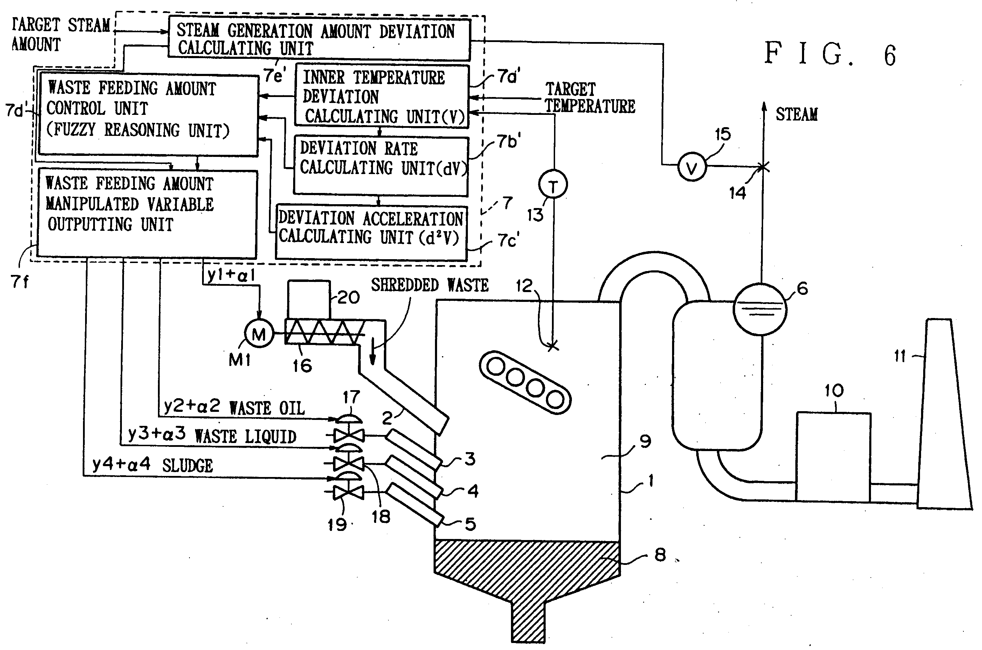

Fig. 6 Illustrates yet another embodiment of the present invention. Unlike in the foregoing embodiments, in which the steam generation amount is controlled, the inner temperature of the incinerator is controlled in the waste feeding amount control device for an industrial waste incinerator shown in Fig. 6. As can be seen from this figure, a temperature sensor 12 for detecting the inner temperature of the incinerator is disposed in the incinerator main body 1. The output of the temperature sensor 12 is supplied to a temperature detector 13 so as to detect the inner temperature of the incinerator. The detection signals are inputted into a waste feeding amount control device 7. The waste feeding amount control device 7 comprises an inner temperature deviation calculating unit 7a', a deviation rate calculating unit 7b', and a deviation acceleration calculating unit 7c'.

Those calculating units are substantially the same as the calculating units in the foregoing embodiments, except that the inner temperature is to be calculated in stead of the steam generation amount. The same non-linear control operation according to fuzzy functions as in the foregoing embodiments is performed, ad the inner temperature deviation, deviation rate, and deviation acceleration are calculated to control the inner temperature. By this non-linear control, the inner temperature can be controlled to approach to the target value in the manner described above.

**[FIELD OF INDUSTRY IN WHICH THE INVENTION IS TO BE UTILIZED]**

As described so far, according to the present invention, the deviation rate and acceleration are determined from temperature fluctuation and steam generation amount fluctuation. Based on the determined values, the inner temperature of the incinerator and the steam generation amount of the waste heat boiler are stabilized. Thus, the amount of steam generated from the waste heat boiler can be effectively utilized for power generation.

The present invention is also advantageous in having excellent controllability as a result of controlling the feeding amount of the liquid waste having great influence on temperature fluctuation and steam generation amount fluctuation, such as waste oil and waste liquid. Variations are quickly compensated by non-linear control in which shredded waste and others are added, so that the temperature and the steam generation amount can be stabilized. Thus, the present invention is effective in that the feeding amounts can be quickly returned to predetermined amounts despite the fluctuations.

Also, if the object to be controlled becomes larger than the target value, the feeding amounts of solid waste and sludge of low heating value are increased, so that the object to be controlled can be returned to the target value. By feeding waste of high heating value, the inner temperature of the incinerator and the steam generation amount can be stabilized even if solid waste and sludge of low heating value are incinerated. Thus, the amounts of waste feed can be effectively controlled.

## Claims

1.    A method of controlling the amounts of various types of waste to be fed into an industrial waste incinerator having a plurality of waste feeding paths, comprising the steps of

   determining a deviation amount between a target value and an observed value of an object to be controlled in the industrial waste incinerator;
   calculating a deviation rate ad deviation acceleration from the deviation amount; and
   controlling each feeding amount of the various types of waste of various heating values by non-linear control, based on the deviation amount, the deviation rate, and the deviation acceleration, thereby setting the object to be controlled at the target value.

2.    The method according to claim 1, wherein
      upon feeding the various types of waste through the plurality of waste feeding paths, the step of controlling the feeding amounts by non-linear control includes the steps of:

   setting increments of the feeding amounts of the various types of waste with respect to the deviation amount, the deviation rate, and the deviation acceleration, according to a plurality of fuzzy rules;
   comparing matching grades of conditions specified in the plurality of fuzzy rules;
   selecting the optimum fuzzy rule from the plurality of fuzzy rules; and
   setting the feeding amounts of the various types of waste.

3.    The method according to claim 1, wherein
      upon feeding the various types of waste through the plurality of waste feeding paths, the step of controlling the waste feeding amounts by non-linear control includes the steps of:

   specifying increments of the feeding amounts of the various types of waste by a plurality of fuzzy rules; and
   composing matching grades of the conditions specified in the plurality of fuzzy rules by fuzzy reasoning, thereby setting the feeding amounts.

4.    A waste feeding amount control device for an industrial waste incinerator, comprising:

   calculation means for calculating a deviation rate and deviation acceleration from a deviation amount between a target value and an observed value of an object to be controlled in the industrial waste incinerator;
   fuzzy reasoning means for performing non-linear control on various types of waste of various heating values, based on the deviation amount, the deviation rate, and the deviation acceleration; and
   manipulated variable outputting means for controlling the object to approach to the target value based on the manipulated variable of each type of waste transmitted from the fuzzy reasoning means.

EP 0 919 770 A1

F I G. 1

TARGET TEMPERATURE

INNER TEMPERATURE DEVIATION CALCULATING UNIT

7e

7d

WASTE FEEDING AMOUNT CONTROL UNIT (FUZZY REASONING UNIT)

STEAM GENERATION AMOUNT DEVIATION CALCULATING UNIT (V)

7a

TARGET VALUE OF STEAM GENERATION AMOUNT (SV)

STEAM

PV

15

V

DEVIATION RATE CALCULATING UNIT (dV)

7b

7

14

WASTE FEEDING AMOUNT MANIPULATED VARIABLE OUTPUTTING UNIT

DEVIATION ACCELERATION CALCULATING UNIT (d²V)

7c

T

13

12

6

7f

y1+α1

SHREDDED WASTE

20

M

M1

16

9

y2+α2 WASTE OIL

17

2

10

11

y3+α3 WASTE LIQUID

3

y4+α4 SLUDGE

4

19

18

5

1

8

10

FIG. 2A  STEAM GENERATION AMOUNT (PV)

TARGET VALUE OF STEAM GENERATION AMOUNT (SV)

SV-PV:STEAM GENERATION AMOUNT DEVIATION (V)

TIME

FIG. 2B  DEVIATION RATE OF STEAM GENERATION AMOUNT (dV)

TIME

FIG. 2C  DEVIATION ACCELERATION OF STEAM GENERATION AMOUNT ($d^2V$)

TIME

FIG. 2D  FEEDING AMOUNT OF WASTE OIL

TIME

FIG. 2E  FEEDING AMOUNT OF SHREDDED WASTE

t1  t2  t3  t4  TIME

EP 0 919 770 A1

FIG. 3A  STEAM GENERATION AMOUNT (PV)

TARGET VALUE OF STEAM GENERATION AMOUNT (SV)

SV-PV:STEAM GENERATION AMOUNT DEVIATION (V)

TIME

FIG. 3B  DEVIATION RATE OF STEAM GENERATION AMOUNT (dV)

TIME

FIG. 3C  DEVIATION ACCELERATION OF STEAM GENERATION AMOUNT ($d^2V$)

TIME

FIG. 3D  FEEDING AMOUNT OF SLUDGE

TIME

FIG. 3E  FEEDING AMOUNT OF WASTE LIQUID

TIME

FIG. 3F  FEEDING AMOUNT OF SHREDDED WASTE

$t_1$   $t_2$   $t_3$   $t_4$   TIME

EP 0 919 770 A1

# FIG. 4A

(b) NEGATIVE DEVIATION (a) NO DEVIATION    MATCHING GRADE    (c) POSITIVE DEVIATION

1.0
0.9
0.5

T3  T2  T1  ← 0 →

BELOW TARGET VALUE    ABOVE TARGET VALUE

(MEMBERSHIP FUNCTION OF STEAM GENERATION AMOUNT DEVIATION V)

# FIG. 4B

(b) NEGATIVE DEVIATION (a) NO VARIATION IN DEVIATION RATE    MATCHING GRADE
RATE    (c) POSITIVE DEVIATION RATE

1.0
0.5

T2  T1  0  T3

CALCULATED VALUE

(MEMBERSHIP FUNCTION OF STEAM GENERATION AMOUNT DEVIATION RATE dV)

# FIG. 4C

(a) NO VARIATION
(b) NEGATIVE DEVIATION IN DEVIATION ACCELERATION    MATCHING GRADE    (c) POSITIVE DEVIATION
ACCELERATION    ACCELERATION

1.0
0.5

T1  0  T3  T2

CALCULATED VALUE

(MEMBERSHIP FUNCTION OF STEAM GENERATION AMOUNT DEVIATION ACCELERATION $d^2V$)

# F I G. 5 A

(a) WASTE OIL INCREMENT
(b) SHREDDED WASTE INCREMENT
(c) NO INCREMENT STATE
(d) SLUDGE INCREMENT
(e) WASTE LIQUID INCREMENT

1
0.7
0.5
0

(−)  P3  P1 (P2)  O (V)  (+)

# F I G. 5 B

(a) WASTE OIL INCREMENT
(b) SHREDDED WASTE INCREMENT
(c) NO INCREMENT STATE
(d) WASTE LIQUID INCREMENT
(e) SLUDGE INCREMENT

1
0.5
0

(−)  P3  P1 (P2)  O(dV)  (+)

# F I G. 5 C

(a) INCREMENT RESTRICTION
(b) INCREMENT RESTRICTION
(BELOW TARGET VALUE)
(ABOVE TARGET VALUE)

1
0.7
0

(−)  P3  P1  O($d^2V$)  P2  (+)

APPLIED TO POSITIVE DEVIATION    APPLIED TO NEGATIVE DEVIATION

F I G. 6

TARGET STEAM AMOUNT

STEAM GENERATION AMOUNT DEVIATION CALCULATING UNIT

7e'

WASTE FEEDING AMOUNT CONTROL UNIT (FUZZY REASONING UNIT)

7d'

INNER TEMPERATURE DEVIATION CALCULATING UNIT(V)

7d'

TARGET TEMPERATURE

DEVIATION RATE CALCULATING UNIT(dV)

7b'

7

WASTE FEEDING AMOUNT MANIPULATED VARIABLE OUTPUTTING UNIT

DEVIATION ACCELERATION CALCULATING UNIT (d²V)

7c'

7f

$y1+\alpha1$

20

SHREDDED WASTE

M

M1

16

$y2+\alpha2$ WASTE OIL

17

2

$y3+\alpha3$ WASTE LIQUID

3

$y4+\alpha4$ SLUDGE

4

19

18

5

13

12

15

STEAM

V

14

6

9

1

10

11

8

EP 0 919 770 A1

F I G. 7

## INTERNATIONAL SEARCH REPORT

| International application No. |
| --- |
| PCT/JP98/02057 |

A. CLASSIFICATION OF SUBJECT MATTER
   Int.Cl$^6$ F23G5/50, F23G7/00

According to International Patent Classification (IPC) or to both national classification and IPC

B. FIELDS SEARCHED

Minimum documentation searched (classification system followed by classification symbols)
   Int.Cl$^6$ F23G5/50, F23G7/00

Documentation searched other than minimum documentation to the extent that such documents are included in the fields searched
   Jitsuyo Shinan Koho          1926–1998    Toroku Jitsuyo Shinan Koho      1994–1998
   Kokai Jitsuyo Shinan Koho    1971–1998

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP, 6-300238, A  (Fuji Electronic Co., Ltd.), 28 October, 1994 (28. 10. 94)  (Family: none) | 1-4 |
| A | JP, 57-55312, A  (Babcock-Hitachi K.K.), 2 April, 1982 (02. 04. 82)  (Family: none) | 1-4 |
| A | JP, 9-79553, A  (Mitsubishi Heavy Industries, Ltd.), 28 March, 1997 (28. 03. 97)  (Family: none) | 1-4 |
| A | JP, 9-273732, A  (NKK Corp.), 21 October, 1997 (21. 10. 97)  (Family: none) | 2-4 |
| A | JP, 6-82023, A  (Okawara Mfg. Co., Ltd.), 22 March, 1994 (22. 03. 94)  (Family: none) | 2-4 |

☐ Further documents are listed in the continuation of Box C.     ☐ See patent family annex.

| | |
| --- | --- |
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 27 August, 1998 (27. 08. 98) | 8 September, 1998 (08. 09. 98) |

| Name and mailing address of the ISA/<br>   Japanese Patent Office | Authorized officer |
| --- | --- |
| Facsimile No. | Telephone No. |

Form PCT/ISA/210 (second sheet) (July 1992)